# EUROPÄISCHE PATENTSCHRIFT

(11) **EP 3 693 960 B1**
(45) Veröffentlichungstag und Bekanntmachung des Hinweises auf die Patenterteilung: **25.09.2024**
(21) Anmeldenummer: 20152793.4
(22) Anmeldetag: 21.01.2020
(51) Int. Cl.: G10L 17/04, G10L 17/10, H04R 25/00

(54) **VERFAHREN FÜR EINE INDIVIDUALISIERTE SIGNALVERARBEITUNG EINES AUDIOSIGNALS EINES HÖRGERÄTS**
METHOD FOR INDIVIDUALIZED SIGNAL PROCESSING OF AN AUDIO SIGNAL OF A HEARING AID
PROCÉDÉ DE TRAITEMENT INDIVIDUALISÉ DU SIGNAL D'UN SIGNAL AUDIO D'UN APPAREIL AUDITIF

(30) Priorität: 05.02.2019 DE 102019201456
(43) Veröffentlichungstag der Anmeldung: 12.08.2020
(73) Patentinhaber: Sivantos Pte. Ltd., Singapore 539775 (SG)
(72) Erfinder: FRÖHLICH, Matthias, 91056 Erlangen (DE)
(74) Vertreter: FDST Patentanwälte

(56) Entgegenhaltungen:
- WO-A2-2020/079485
- DE-A1- 102015 212 609
- US-A1- 2017 188 173
- US-A1- 2020 296 521
- US-B1- 6 404 925

## Beschreibung

Die Erfindung betrifft ein Verfahren für eine individualisierte Signalverarbeitung eines Audiosignals eines Hörgerätes. Die Erfindung betrifft weiter ein System mit einem Hörgerät zur Durchführung eines solchen Verfahrens.

Auf dem Gebiet der Audio-Signalverarbeitung von Sprachsignalen, also von Audiosignalen, deren Signalbeiträge zu einem wesentlichen Anteil von Sprachbeiträgen stammen, ergibt sich oftmals das Problem, in einem aufgezeichneten Audiosignal eine Sprachbeitrag gegenüber einem Rauschhintergrund anzuheben, d. h., den Sprachbeitrag relativ zu den restlichen Signalbeiträgen zu verstärken. Während eine derartige Verstärkung für solche Audiosignale, bei welchen eine Wiedergabe deutlich zeitversetzt zur Aufzeichnung vorgesehen ist, also beispielsweise bei Tonspur-Aufnahmen für Filmproduktionen, durch komplexe, nicht Echtzeitfähige Algorithmen zur Signalverarbeitung bewerkstelligt werden kann, ist dies für den Fall einer notwendigen Signalverarbeitung in Echtzeit je nach Art des Rauschhintergrundes und je nach Qualitätsanforderungen an das zu erzeugende Ausgangssignal ungleich schwerer.

Eine derartige Signalverarbeitung liegt z.B. bei der Verwendung eines Hörgerätes zum Ausgleich einer Hörschwäche eines Benutzers des Hörgerätes vor. Da sich für Personen mit Hörschwäche selbige infolge des daraus resultierenden Verlustes an Sprachverständlichkeit gerade in Gesprächssituationen in besonders unangenehmer Form zu vernehmen sind, ist die Verstärkung von Sprachsignalen gegenüber einem Rauschhintergrund oder generell eine Verbesserung der verständlichkeit eines Audiosignals mit entsprechenden Sprach-Signalbeiträgen in einem Hörgerät von besonderer Bedeutung.

Da ein Hörgerät hierbei seinem Benutzer die reale akustische Umgebung, in welcher sich der Benutzer wiederfindet, in einer möglichst auf dessen Hörschwäche abgestimmten Weise aufbereiten soll, erfolgt auch hier eine Signalverarbeitung in Echtzeit bzw. mit möglichst geringer Zeitverzögerung. Die Verstärkung von Sprachbeiträgen wird dabei insbesondere in komplexeren akustischen Situationen, in welcher mehrere Sprecher vorhanden sind, von denen gegebenenfalls nicht alle als relevant anzusehen sind (beispielsweise sogenannte Cocktail-Party-Situation) zu einer wichtigen Unterstützung für den Benutzer.

Hierbei gibt es jedoch, bedingt durch den Alltag und die Lebenssituation des Benutzers, üblicherweise einige Personen, deren Sprachbeiträge aufgrund ihrer angenommenen Wichtigkeit für den Benutzer stets zur verstärken sind, unabhängig von der sonstigen Situation bzw. den sonstigen Bedingungen. Dies ist meist für enge Familienangehörige des Benutzers, oder auch für Pflegepersonal, insbesondere bei älteren Benutzern, der Fall. Eine Steuerung einer derartigen "individualisierten" Verstärkung von Sprachbeiträgen bevorzugte Gesprächspartner durch den Benutzer würde für diesen gerade in komplexeren akustischen Umgebungen und Situationen ein häufiges Ansteuern und Ändern des jeweiligen Modus der Signalverarbeitung mit sich bringen, was nicht zuletzt infolge der negativen Auswirkungen auf die Konzentration hinsichtlich der Gesprächsbeiträge unerwünscht ist.

Die US 2017 /0 188 173 A1 nennt ein Verfahren zum Präsentieren zusätzlicher Informationen, welche für eine Audioszene relevant sind. Hierbei werden Audiosignale der Audioszene mit einer Vielzahl von Mikrofonen erfasst, und nebenbei ein Videoaufnahme der Situation der Audioszene erstellt. Die erfassten Audiosignale werden durch Filtern, Equalizing, Echo-Verarbeitung und/oder Richtmikrofonie verarbeitet, und einzelne Audiosignalquellen unter werden Verwendung der verarbeiteten Audiosignale und ggf. der Videoaufnahme unterschieden. Anhand der Audiosignale und/oder einer Erkennung der Situation können einzelne Audiosignalquellen ihrer Art nach klassifiziert werden, wobei bezüglich der klassifizierten Audiosignalquelle zusätzliche Informationen abgerufen und einem Benutzer präsentiert werden, z.B. mittels einer Datenbrille.

In der US 6 404 925 B1 wird offenbart, anhand von Video-Aufnahmen eines Vortrages einen Sprachbeitrag in einem Audiosignal des Vortrages einem konkreten Sprecher zuzuordnen. Hierbei werden Sprachsequenzen geclustert, und längere Sprachsequenzen als Trainings-Daten für eine Sprechererkennung herangezogen, welche z.B. mittels eines Hidden-Markov-Model implementiert werden kann.

Die DE 10 2015 212 609 A1 nennt ein Verfahren zum Betrieb eines Hörgerätesystems, bei dem eine erste Audioquelle anhand eines ersten Audiosignals identifiziert wird. Ein erster charakteristischer Wert einer ersten Audioquelle wird identifiziert, und anhand des ersten charakteristischen Werts wird ein in einer Datenbank hinterlegter erster Datensatz identifiziert. Eine zu dem hinterlegten ersten Datensatz korrespondierende erste Information, welche durch ein hinterlegtes Bild der ersten Audioquelle gegeben sein kann, wird ausgegeben, und eine Benutzereingabe eines Benutzers wird erfasst. Anhand des hinterlegten ersten Datensatz wird die Charakteristik des Hörgerätesystems in Abhängigkeit der Benutzereingabe verändert.

In der WO 2020/079485 A2 wird für ein Hörgerätesystem eine selektive Verstärkung von Audiosignalen offenbart, welch einer Stimme einer erkannten Person zugeordnet sind. Das Hörgerätesystem kann dabei eine tragbare Kamera umfassen, die dazu eingerichtet ist, mehrere Bilder aus einer Umgebung eines Benutzers aufzunehmen, sowie mindestens ein Mikrofon, welches dazu eingerichtet ist, Schall aus einer Umgebung des Benutzers aufzunehmen. Ein programmierbarer Prozessor des Hörgerätesystems empfängt mehrere von der Kamera aufgenommene Bilder, identifiziert eine Darstellung von mindestens einer erkannten Person in mindestens einem der empfangenen Bilder, und bewirkt eine selektive Konditionierung von mindestens einem Audiosignal, das von mindestens einem Mikrofon aus einem Bereich empfangen wird, der der erkannten Person zugeordnet ist. Das konditionierte Audiosignal wird dann als Schallsignal an ein Ohr des Benutzers ausgegeben.

Der Erfindung liegt daher die Aufgabe zugrunde, für Audiosignale eines Hörgerätes ein Verfahren anzugeben, mittels dessen Sprachbeiträge von bevorzugten Gesprächspartnern möglichst automatisch und verlässlich in Echtzeit gegenüber anderen Signalbeiträgen hervorgehoben werden können. Der Erfindung liegt weiter die Aufgabe zugrunde, ein System mit einem Hörgerät anzugeben, welches zur Durchführung eines derartigen Verfahrens geeignet und eingerichtet ist.

Die erstgenannte Aufgabe wird erfindungsgemäß gelöst durch ein Verfahren für eine individualisierte Signalverarbeitung eines Audiosignals eines Hörgerätes, wobei für ein Audiosignal in einer Erkennungsphase durch eine Hilfsvorrichtung eine erste Bildaufnahme erzeugt wird, anhand der Bildaufnahme auf eine Anwesenheit eines bevorzugten Gesprächspartners geschlossen wird, und hierauf eine erste Audiosequenz des Audiosignals und/oder eines Hilfs-Audiosignals der Hilfsvorrichtung auf charakteristische Sprecher-Identifikationsparameter hin analysiert wird, und die in der ersten Audiosequenz ermittelten Sprecher-Identifikationsparameter in einer Datenbank hinterlegt werden. Erfindungsgemäß ist dabei weiter vorgesehen, dass in einer Anwendungsphase das Audiosignal bezüglich der hinterlegten Sprecher-Identifikationsparameter analysiert wird, und hierdurch hinsichtlich einer Anwesenheit des bevorzugten Gesprächspartners bewertet wird, und bei einer erkannten Anwesenheit des bevorzugten Gesprächspartners dessen Signalbeiträge im Audiosignal insbesondere relativ zu anderen Signalbeiträgen hervorgehoben werden. Weitere vorteilhafte und teils für sich gesehen erfinderische Ausgestaltungen sind in den Unteransprüchen und in der nachfolgenden Beschreibung dargelegt.

Die zweitgenannte Aufgabe wird erfindungsgemäß gelöst durch ein System mit einem Hörgerät und einer Hilfsvorrichtung, wobei die Hilfsvorrichtung zum Erzeugen einer Bildaufnahme eingerichtet ist, und wobei das System zur Durchführung des vorbeschriebenen Verfahrens eingerichtet ist. Bevorzugt ist dabei die Hilfsvorrichtung als ein Mobiltelefon ausgestaltet. Das erfindungsgemäße System teilt dabei die Vorteile des Erfindungsgemäßen Verfahrens. Die sich für das Verfahren und für seine nachfolgend genannten Weiterbildungen ergebenden Vorteile können dabei sinngemäß auf das System übertragen werden.

Unter einem Audiosignal eines Hörgerätes ist hierbei insbesondere ein solches Signal umfasst, dessen Signalbeiträge direkt oder in einer weiter verarbeiteten Form über einen Ausgangswandler des Hörgerätes an das Gehör eines Benutzers des Hörgerätes als Ausgangsschall ausgegeben werden. Insbesondere ist also das Audiosignal gegeben durch ein Zwischensignal der im Hörgerät stattfindenden Signalverarbeitungsprozesse, und wird somit nicht lediglich als ein sekundäres Steuersignal für eine Signalverarbeitung eines anderen, primären Signals verwendet, auf welchem das durch den oder die Ausgangswandler des Hörgerätes auszugeben der Signal passiert, sondern bildet selbst ein derartiges primäres Signal.

Die Erkennungsphase ist hierbei insbesondere gegeben durch einen Zeitraum, in welchem die Sprecher-Identifikationsparameter ermittelt werden, auf deren Basis in der Anwendungsphase die Anwesenheit des bevorzugten Gesprächspartners erkannt werden soll. Die besagte Anwendungsphase selbst ist hierbei in diesem Zusammenhang insbesondere gegeben durch einen Zeitraum, in welchem anhand der beschriebenen erkannten Anwesenheit des bevorzugten Gesprächspartners die Signalverarbeitung entsprechend angepasst wird.

Unter einer Bildaufnahme ist hierbei und im Folgenden insbesondere ein Standbild und eine Videosequenz, also eine kontinuierliche Abfolge einer Mehrzahl an Standbildern umfasst. Die Hilfsvorrichtung ist hierbei insbesondere für die Erzeugung der ersten Bildaufnahme entsprechend eingerichtet, also insbesondere durch eine Kamera oder eine ähnliche Vorrichtung zur optischen Aufnahme von Bildern einer Umgebung. Bevorzugt ist hierbei die Hilfsvorrichtung zusätzlich dazu eingerichtet, zusätzlich zur Bildaufnahme oder durch diese ausgelöst einen entsprechenden Befehl an das Hörgerät zu senden, um den Analysevorgang zu starten.

Die Anwesenheit des bevorzugten Gesprächspartners wird hierbei aus der ersten Bildaufnahme bevorzugt in zeitlich unmittelbarer Nähe zu deren Erzeugung geschlossen. Bevorzugt vergeht somit zwischen der Erzeugung der ersten Bildaufnahme, welche insbesondere automatisch eine entsprechende Analyse des erzeugten Bildmaterials hinsichtlich des bevorzugten Gesprächspartners in Gang setzt, und dem Beginn der ersten Audiosequenz des Audiosignals lediglich die für besagte Analyse erforderliche Zeit, also bevorzugt weniger als 60 Sekunden, besonders bevorzugt weniger als 10 Sekunden.

Für die Analyse der ersten Audiosequenz des Audiosignals in der Erkennungsphase ist es dabei allerdings nicht erforderlich, dass die erste Audiosequenz nach der ersten Bildaufnahme aufgezeichnet wird. Vielmehr kann in der Erkennungsphase auch eine kontinuierliche (insbesondere lediglich zwischenzeitliche) Aufzeichnung des Audiosignals erfolgen, und auf die erste Bildaufnahme hin die erste Audiosequenz aus der besagten Aufzeichnung des Audiosignals mittels der Zeitreferenz der ersten Bildaufnahme entnommen werden, wobei diese Zeitreferenz eben nicht zwingend den Beginn der ersten Audiosequenzen markieren muss, sondern beispielsweise auch deren Mitte oder deren Ende markieren kann.

Insbesondere weist die erste Audiosequenz eine vorgegebene Länge, bevorzugt mindestens 10 Sekunden, besonders bevorzugt mindestens 25 Sekunden auf.

Die Auswahl, ob eine Person als ein bevorzugter Gesprächspartner zu betrachten ist, erfolgt insbesondere anhand von durch den Benutzer des Hörgerätes vordefinierten Kriterien, beispielsweise über einen Abgleich der ersten Bildaufnahme mit Bildaufnahmen von Personen, welche gemäß der eigenen Angaben des Benutzers des Hörgerätes für diesen eine besondere Wichtigkeit aufweisen, beispielsweise Familienmitglieder oder enge Freunde. Eine derartige Angabe kann beispielsweise in einer entsprechenden Klassifikation der Bilder einer genannten Person in einem virtuellen Fotoarchiv als "Favorit" bestehen. Die Auswahl kann jedoch auch automatisch ohne eine explizite Angabe des Benutzers hinsichtlich eines bevorzugten Gesprächspartners erfolgen, indem z.B. innerhalb der in der Hilfsvorrichtung hinterlegten Bilddaten eine Häufigkeitsanalyse durchgeführt wird, und besonders häufig wiederkehrende Personen als bevorzugte Gesprächspartner identifiziert werden.

Als charakteristische Sprecher-Identifikationsparameter sind hierbei insbesondere solche Parameter zu verstehen, welche anhand der Sprache eine Identifizierung des Sprechers ermöglichen, und hierfür quantifizierbar Merkmale eines Sprachsignals beschreiben, also beispielsweise spektrale und/oder temporale, also insbesondere prosodische Merkmale. Anhand der in der Erkennungsphase ermittelten Sprecher-Identifikationsparameter, welche entsprechend in der Datenbank hinterlegt wurden, wird nun in der Anwendungsphase das Audiosignal insbesondere auf einen entsprechenden Befehl hin oder auch in einem eigens eingestellten Hörgeräteprogramm als Standard-Voreinstellung hinsichtlich dieser hinterlegten Sprecher-Identifikationsparameter analysiert, um anhand derselben eine Anwesenheit einer Person erkennen zu können, welche vorab als ein bevorzugter Gesprächspartner definiert wurde.

Während also während der Erkennungsphase die Anwesenheit eines bevorzugten Gesprächspartners anhand der ersten Bildaufnahme erkannt wird, und somit die Analyse der ersten Audiosequenz zum Gewinnen der charakteristischen Sprecher-Identifikationsparameter initiiert wird, kann eben anhand dieser in der Datenbank hinterlegten Sprecher-Identifikationsparameter in der Anwendungsphase die Anwesenheit des bevorzugten Gesprächspartners erkannt werden. Hierauf wird nun die Signalverarbeitung des Hörgerätes dahingehend abgestimmt, dass dessen Signalbeiträge oder vermutete Signalbeiträge im Audiosignal gegenüber anderen Signalbeiträgen und insbesondere gegenüber anderen Sprachbeiträgen sowie gegenüber einem Rauschhintergrund angehoben werden, d. h. relativ zu diesen verstärkt werden. Die Datenbank ist hierbei bevorzugt in einem entsprechenden, insbesondere nicht-flüchtigen Speicher des Hörgerätes implementiert.

Die Bewertung des Audiosignals in der Anwendungsphase hinsichtlich der Anwesenheit des bevorzugten Gesprächspartners kann hierbei insbesondere durch einen Vergleich entsprechender Merkmalsvektoren, beispielsweise über eine Abstandsberechnung bzw. über eine Berechnung eines koeffizientenweise gewichteten Abstands erfolgen. Dabei sind in einem derartigen Merkmalsvektor die einzelnen Einträge jeweils durch einen numerischen Wert eines konkreten Sprecher-Identifikationsparameters gegeben, sodass ein koeffizientenweiser Vergleich mit einem für einen bevorzugten Gesprächspartner hinterlegten Merkmalsvektor sowie gegebenenfalls eine Überprüfung hinsichtlich einzelner Grenzwerte für jeweiligen Koeffizienten ermöglicht wird.

Günstigerweise wird hierbei der bevorzugte Gesprächspartner in der ersten Bildaufnahme anhand einer Gesichtserkennung erkannt. Unter einer Gesichtserkennung ist dabei insbesondere ein Algorithmus zu verstehen, welcher dazu eingerichtet und vorgesehen ist, in einer Bildaufnahme mit einem a priori unbekannten Bildmaterial über Methoden der Mustererkennung ein Objekt als menschliches Gesicht zu erkennen und überdies einem konkreten Individuum aus einer Anzahl an vordefinierten Personen zuzuordnen.

Zweckmäßigerweise wird als Hilfsvorrichtung ein Mobiltelefon und/oder eine Datenbrille verwendet. Insbesondere wird dabei das Mobiltelefon vom Benutzer des Hörgerätes bedient bzw. die Datenbrille vom Benutzer am Kopf getragen. Eine Datenbrille ist eine Brille, welche eine Datenverarbeitungseinheit aufweist, um z.B. Informationen wie Webseiten etc. aufzubereiten und anschließend für den Träger in dessen Sichtfeld sichtbar darzustellen. Eine derartige Datenbrille ist vorzugsweise mit einer Kamera zur Erzeugung von Bildaufnahmen des Sichtfeldes des Trägers ausgerüstet, wobei die Bildaufnahmen von der Datenverarbeitungseinheit erfasst werden.

In einer alternativen Ausgestaltung ist hierbei das Hörgerät in die Datenbrille integriert, d.h., Eingangs- und Ausgangswandler des Hörgerätes sowie die Signalverarbeitungseinheit sind zumindest teilweise an ein Gehäuse der Datenbrille, z.B. an einem oder beiden Bügeln, angebunden bzw. in diese(n) eingefügt.

Bevorzugt erfolgt wenigstens ein Teil der Analyse der Erkennungsphase und/oder die Erzeugung des Audiosignals für die Erkennungsphase in der Hilfsvorrichtung. Insbesondere im Fall, dass die Hilfsvorrichtung durch ein Mobiltelefon gegeben ist, kann dessen verglichen mit üblichen Hörgeräten hohe Rechenleistung für die Analyse der Erkennungsphase herangezogen werden. Das Audiosignal kann hierbei vom Hörgerät an das Mobiltelefon zur Analyse übertragen werden, da in der Anwendungsphase üblicherweise das Audiosignal, welches im Hörgerät selbst erzeugt wird, auf Sprecher-Identifikationsparameter hin untersucht werden soll. Somit entstehen hierbei keine Inkonsistenzen durch unterschiedliche Erzeugungsorte des Audiosignals in den beiden Phasen. Andererseits kann das Mobiltelefon in der Erkennungsphase durch ein integriertes Mikrofon das Audiosignal auch selbst erzeugen. Bevorzugt ist eine derartige Erzeugung des Audiosignals außerhalb vom Hörgerät bei der Analyse der Erkennungsphase und/oder bei der Analyse der Anwendungsphase entsprechend zu berücksichtigen, beispielsweise durch Transferfunktionen.

In einer vorteilhaften Ausführung werden als Sprecher-Identifikationsparameter eine Anzahl an Tonhöhen und/oder eine Anzahl an Formantenfrequenzen und/oder eine Anzahl an Phonspektren und/oder eine Verteilung von Betonungen und/oder eine zeitliche Verteilung von Phonen und/oder Sprachpausen analysiert. Insbesondere können hierbei im Rahmen einer Analyse von Tonhöhen auch unterschiedliche Tonhöhenverläufe bei tonalen Sprachen wie dem Chinesischen oder bei tonalen Akzenten wie in skandinavischen Sprachen und Dialekten analysiert werden. Eine Analyse von Formantenfrequenzen ist besonders vor dem Hintergrund vorteilhaft, dass die Formantenfrequenzen den Vokalklang bestimmen, welcher für den Klang eines Stimme besonders charakteristisch ist, und somit auch für eine potentielle Identifizierung eines Sprechers herangezogen werden kann. Die Analyse umfasst hierbei insbesondere eine Analyse der zeitlichen Verläufe von Übergängen jeweils zwischen einzelnen Tonhöhen, Phonemen, sprachdynamischer Betonungen, und/oder Formanten bzw. Formantenfrequenzen. Die zu hinterlegenden Sprecher-Identifikationsparameter können dann bevorzugt anhand der zeitlichen Verläufe und insbesondere anhand der besagten Übergänge bestimmt werden.

Unter einem Phon ist hierbei insbesondere das kleinste isolierte Schallereignis bzw. die kleinste akustisch auflösbare Spracheinheit zu verstehen, also z.B. ein Explosiv- oder Zischlaut, welcher einem Konsonanten entspricht. Anhand der spektralen Verteilung der Phone können so z.B. charakteristische Eigenarten, wie sie u.a. beim Lispeln o.ä. auftreten, für eine potentielle Identifizierung eines Sprechers als bevorzugter Gesprächspartner verwendet werden. Die Analyse der Verteilung von Betonungen, also insbesondere einer sprachlichen Intonation, kann einen zeitlichen Abstand und relative Amplitudenunterschiede der Betonungen zueinander und zu den jeweils unbetonten Passagen beinhalten. Die Analyse der zeitlichen Verteilung von Phonen und/oder Sprachpausen, also mitunter der Sprechgeschwindigkeit, kann sich hierbei insbesondere auch auf das Ermitteln charakteristischer Unregelmäßigkeiten erstrecken.

Als weiter vorteilhaft erweist es sich, wenn die erste Audiosequenz in eine Mehrzahl an sich bevorzugt teilweise überlappenden Teilsequenzen zerlegt wird, wobei für jede der Teilsequenzen jeweils ein Sprachverständlichkeitsparameter, z.B. ein "Speech intellegibility index" (SII) und/oder ein Signal-zu-Rausch-Verhältnis (SNR) ermittelt und mit einem zugehörigen Kriterium, also insbesondere mit einem Schwellwert für SII bzw. SNR o.ä., verglichen wird, und wobei für die Analyse hinsichtlich der charakteristischen Sprecher-Identifikationsparameter nur diejenigen Teilsequenzen herangezogen werden, welche jeweils das Kriterium erfüllen, also insbesondere oberhalb des Schwellwertes liegen. Der SII ist ein Parameter, welcher anhand spektraler Information ein möglichst objektives Maß für die Verständlichkeit einer Sprachinformation liefern soll, welche in einem Signal enthalten ist. Es existieren ähnliche Definitionen für quantitative Sprachverständlichkeitsparameter, welche hier ebenfalls verwendet werden können. Die Länge der Teilsequenzen kann hierbei insbesondere in Abhängigkeit der zu untersuchenden Sprecher-Identifikationsparameter gewählt werden; hierbei sind auch mehrere "parallele" Zerlegungen der ersten Audiosequenz möglich. Für die Untersuchung einzelner Tonhöhen, Formantenfrequenzen oder Phone können dabei die Teilsequenzen kürzer gewählt werden, z.B. im Bereich von 100 Millisekunden bis 300 Millisekunden, während für zeitliche Verläufe bevorzugt die Teilsequenzen zu einer Länge von 2 bis 5 Sekunden gewählt werden..

Günstigerweise werden die erste Audiosequenz in eine Mehrzahl an sich bevorzugt teilweise überlappenden Teilsequenzen zerlegt, wobei eine eigene Sprachaktivität des Benutzers des Hörgerätes überwacht wird, und wobei für die Analyse hinsichtlich der charakteristischen Sprecher-Identifikationsparameter nur diejenigen Teilsequenzen herangezogen werden, deren Anteil an eigener Sprachaktivität des Benutzers eine vorgegebene Obergrenze nicht überschreitet, und bevorzugt gar keine eigene Sprachaktivität des Benutzers aufweisen. Die Überwachung der Sprachaktivität kann hierbei beispielsweise über eine "Own Voice Detection" (OVD) des Hörgerätes erfolgen. Die Verwendung nur solcher Teilsequenzen welche keine oder praktisch keine eigene Sprachaktivität des Benutzers des Hörgerätes aufweisen, stellt sicher, dass die in diesen Teilsequenzen ermittelten Sprecher-Identifikationsparameter mit höchstmöglicher Wahrscheinlichkeit dem bevorzugten Gesprächspartner zuzuordnen sind.

Bevorzugt wird in der Hilfsvorrichtung eine zweite Bildaufnahme erzeugt, wobei auf die zweite Bildaufnahme hin eine zweite Audiosequenz des Audiosignals und/oder eines Audiosignals der Hilfsvorrichtung hinsichtlich charakteristischer Sprecher-Identifikationsparameter analysiert wird, wobei mittels der anhand der zweiten Audiosequenz ermittelten Sprecher-Identifikationsparameter die in der Datenbank hinterlegten Sprecher-Identifikationsparameter angepasst werden. Bevorzugt ist dabei die zweite Bildaufnahme in ihrer Art zur ersten identisch, also z.B. eine erneute Standbild-Aufnahme oder eine erneute Aufnahme einer Videosequenz. Bevorzugt dient die zweite Bildaufnahme als Auslöser für die Analyse der zweiten Audiosequenz. Insbesondere wird während der Erkennungsphase, als insbesondere bis diese als abgeschlossen betrachtet werden kann, durch jede Bildaufnahme der Art der ersten Bildaufnahme eine Audiosequenz auf charakteristische Sprecher-Identifikationsparameter hin analysiert, worauf hin die in der Datenbank hinterlegten Sprecher-Identifikationsparameter jeweils entsprechend angepasst werden.

Die Erkennungsphase kann dann nach einer vorgegebenen Anzahl an analysierten Audiosequenzen beendet werden, oder wenn die in der Datenbank hinterlegten Sprecher-Identifikationsparameter in einer hinreichend hohen Qualität vorliegen. Dies ist insbesondere dann der Fall, wenn eine Abweichung der anhand der zweiten Audiosequenz ermittelten Sprecher-Identifikationsparameter von den in der Datenbank hinterlegten Sprecher-Identifikationsparametern einen Grenzwert unterschreitet, wobei auch eine wiederholte Unterschreitung in vorgegebener Zahl gefordert werden kann.

Als vorteilhaft erweist es sich hierbei, wenn die Anpassung der in der Datenbank hinterlegten Sprecher-Identifikationsparameter mittels der anhand der zweiten Audiosequenz oder jeder nachfolgenden Audiosequenz der Erkennungsphase ermittelten Sprecher-Identifikationsparameter durch eine insbesondere arithmetische, gewichtete oder rekursive Mittelung, bevorzugt auch mit wenigstens einigen der bereits hinterlegten Sprecher-Identifikationsparameter, und/oder durch ein künstliches neuronales Netz erfolgt. Die hinterlegten Sprecher-Identifikationsparameter können dabei beispielsweise die Ausgangsschicht ("Output layer") des künstlichen neuronalen Netzes bilden, und dabei die Gewicht der Verbindungen zwischen einzelnen Schichten des künstlichen neuronalen Netzes derart angepasst werden, dass Sprecher-Identifikationsparameter der zweiten Audiosequenz, welche der Eingangsschicht ("Input layer") des künstlichen neuronalen Netzes zugeführt werden, mit möglichst geringem Fehler auf die Ausgangssicht abgebildet wird, um einen möglichst stabilen Satz an hinterlegten Referenzparametern zu erzeugen.

Bevorzugt wird in der Anwendungsphase die Analyse des Audiosignals anhand einer weiteren Bildaufnahme der Hilfsvorrichtung initiiert. Dies kann insbesondere umfassen, dass jedes Mal, wenn eine Bildaufnahme durch die Hilfsvorrichtung erzeugt wird, im Hörgerät eine Analyse des Audiosignals hinsichtlich der in der Datenbank hinterlegten Sprecher-Identifikationsparameter erfolgt, um die Anwesenheit des bevorzugten Sprechers festzustellen. Insbesondere kann hierfür die weitere Bildaufnahme auch hinsichtlich der Anwesenheit des bevorzugten Gesprächspartners ausgewertet werden, sodass bei einer Anwesenheit des bevorzugten Gesprächspartners eine Analyse des Audiosignals gezielt hinsichtlich der in der Datenbank hinterlegten Sprecher-Identifikationsparameter des anwesenden bevorzugten Gesprächspartners erfolgt. Bevorzugt ist hierbei die Hilfsvorrichtung dazu eingerichtet, zusätzlich zur Bildaufnahme oder durch diese ausgelöst einen entsprechenden Befehl an das Hörgerät zu senden. Alternativ dazu kann eine derartige Analyse aber auch durch eine Benutzereingabe initiiert werden, sodass z.B. der Benutzer zu Beginn einer längeren Situation mit einem seiner bevorzugten Gesprächspartner einen entsprechenden Modus oder ein Hörgeräteprogramm auswählt, in welchem das Audiosignal wiederholt oder kontinuierlich auf die entsprechenden Sprach-Informationsparameter hin überprüft wird.

Als weiter vorteilhaft erweist es sich, wenn in der ersten Bildaufnahme eine Anzahl an anwesenden Personen bestimmt wird, wobei die erste Audiosequenz des Audiosignals in Abhängigkeit der Anzahl der anwesenden Personen analysiert wird. Wird beispielsweise aus der ersten Bildaufnahme ermittelt, dass eine Mehrzahl oder gar eine Vielzahl von Personen anwesend und insbesondere auch dem Benutzer des Hörgerätes zugewandt ist, so sind möglicherweise Sprachanteile in der ersten Audiosequenz nicht oder nicht durchweg vom bevorzugten Gesprächspartner, sondern von einer anderen Person. Dies kann die Qualität der zu hinterlegenden Sprecher-Identifikationsparameter beeinträchtigen. In diesem Fall kann die Erkennungsphase vorübergehend ausgesetzt werden, und somit eine Analyse der ersten Audiosequenz unterbleiben, um Batterieleistung zu sparen, wenn die Analyse angesichts der anwesenden potentiellen Sprecher nicht hinreichend erfolgversprechend oder nützlich erscheint.

In einer vorteilhaften Ausgestaltung der Erfindung wird die erste Bildaufnahme als Teil einer ersten Bildsequenz, also insbesondere einer Videosequenz, erzeugt, wobei in der ersten Bildsequenz eine Sprachaktivität, insbesondere anhand der Mundbewegungen, des bevorzugten Gesprächspartners erkannt wird, und wobei die erste Audiosequenz des Audiosignals in Abhängigkeit der erkannten Sprachaktivität des bevorzugten Gesprächspartners analysiert wird. Dies erlaubt es, auch die besonderen Vorteile von durch die Hilfsvorrichtung aufgezeichneten Videosequenzen hinsichtlich der spezifischen personenbezogenen Informationen mit für das Verfahren zu nutzen. Wird z.B. anhand der ersten Bildsequenz erkannt, dass der bevorzugte Gesprächspartner gerade spricht, so ist die zugehörige erste Audiosequenz bevorzugt auf Sprecher-Identifikationsparameter zu analysieren. Ist hingegen aus der ersten Bildsequenz klar ersichtlich, dass der bevorzugte Gesprächspartner gerade nicht spricht, so kann eine Analyse der zugehörigen Audiosequenz unterbleiben.

Günstigerweise erfolgt eine Anhebung der Signalbeiträge des bevorzugten Gesprächspartners anhand einer direktionalen Signalverarbeitung und/oder anhand einer blinden Quellentrennung ("blind source separation", BSS). Die BSS ist ein Verfahren, um aus einer Mischung mehrerer Signale mit limitierter Information ein bestimmter Signal zu isolieren, wobei das mathematische Problem hierbei meist stark unterbestimmt ist. Für die BSS können daher insbesondere die Sprecher-Identifikationsparameter herangezogen werden, d.h., diese werden nicht nur zum Erkennen der Anwesenheit des bevorzugten Sprechers verwendet, sondern auch als Zusatzinformation, um die Unterbestimmung zu verringern und so die gewünschten Sprachbeiträge im möglicherweise verrauschten Audiosignal besser gegen den Hintergrund isolieren und entsprechend verstärken zu können.

Nachfolgend wird ein Ausführungsbeispiel der Erfindung anhand einer Zeichnung näher erläutert. Hierbei zeigen jeweils schematisch:
- Fig. 1: schematisch in einem Blockdiagramm eine Erkennungsphase eines Verfahrens für eine individualisierte Signalverarbeitung in einem Hörgerät, und
- Fig. 2: schematisch in einem Blockdiagramm eine Anwendungsphase des Verfahrens für individualisierte Signalverarbeitung im Hörgerät nach Fig. 1.

Einander entsprechende Teile und Größen sind in allen Figuren jeweils mit gleichen Bezugszeichen versehen.

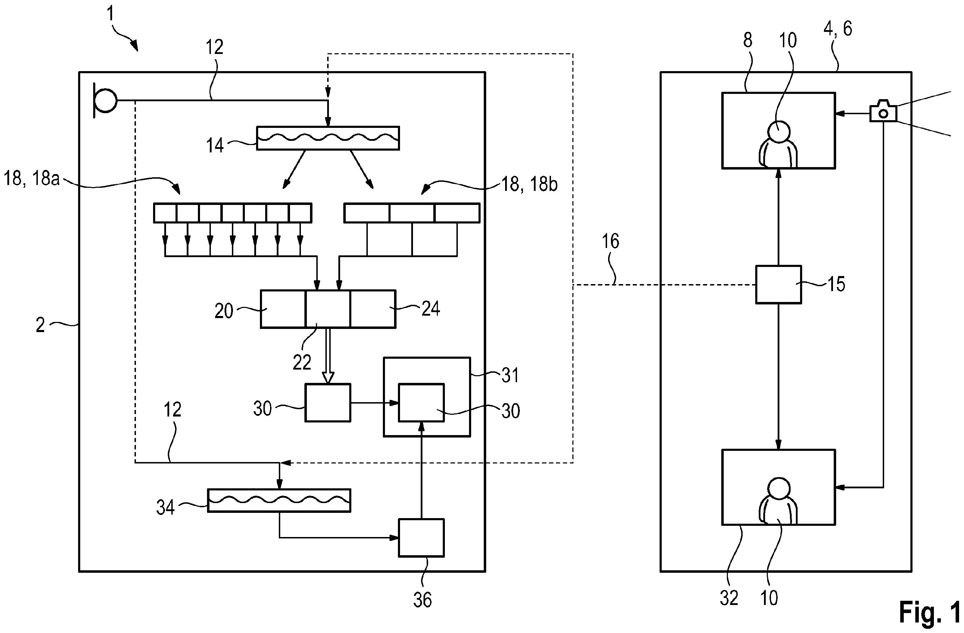

In Figur 1 ist schematisch in einem Blockdiagramm eine Erkennungsphase 1 eines Verfahrens für eine individualisierte Signalverarbeitung in einem Hörgerät 2 dargestellt. Ziel der Erkennungsphase 1 ist es, in noch zu beschreibender Weise für bestimmte Personen aus dem engeren Umfeld eines Benutzers des Hörgerätes 2 bestimmte akustische Parameter ermitteln zu können, anhand derer sich in einem Eingangssignal des Hörgerätes 2 Signalkomponenten als Sprachbeiträge der betreffenden Personen identifizieren lassen können, um diese Sprachbeiträge für den Benutzer des Hörgerätes 2 gezielt gegenüber einem Rauschhintergrund, aber auch gegenüber anderen Sprachbeiträgen von anderen Sprechern hervorheben zu können. Dies erfolgt insbesondere unter der Annahme, dass die Sprachbeiträge dieser Personen für den Benutzer des Hörgerätes 2 aufgrund der persönlichen Beziehung zu den Sprechern von besonderer Bedeutung sind.

Der Benutzer des Hörgerätes 2 erzeugt mit einer Hilfsvorrichtung 4, welche vorliegend als ein Mobiltelefon 6 ausgebildet ist, eine erste Bildaufnahme 8. Als Hilfsvorrichtung 4 könnte hierbei alternativ oder auch zusätzlich zum in Figur 1 dargestellten Mobiltelefon 6 eine Datenbrille (wie zum Beispiel "Google Glass") oder ein Tablet-PC verwendet werden, welche für eine Erzeugung der ersten Bildaufnahme 8 eingerichtet sind. In der Hilfsvorrichtung 4 wird nun die erste Bildaufnahme 8 mittels einer entsprechenden Applikation zur Gesichtserkennung auf eine Anwesenheit eines bevorzugten Gesprächspartners 10 in untersucht. Als bevorzugte Gesprächspartner 10 sind hierbei insbesondere diejenigen Personen hinterlegt, welche in einer Foto-Applikation des Mobiltelefons 6 und/oder in einer auf dem Mobiltelefon 6 installierten Applikation für ein soziales Netzwerk vom Benutzer des Hörgerätes 2 selbst als besonders wichtige Freunde/Favoriten/enge Familienmitglieder etc. markiert wurden.

Wird nun durch die Applikation zur Gesichtserkennung in der ersten Bildaufnahme 8 eine der genannten Personen und somit also ein bevorzugter Gesprächspartner 10 als anwesend erkannt, so wird nun eine erste Audiosequenz 14 analysiert. Die erkannte Anwesenheit des bevorzugten Gesprächspartners 10 dient hierbei als Trigger für eine Auslösung der Analyse der ersten Audiosequenz 14 des Audiosignals 12. Alternativ zum dargestellten Vorgehen, wobei die erste Audiosequenz vom Audiosignal 12 generiert wird, das im Hörgerät 2 selbst durch dessen Eingangswandler (also zum Beispiel Mikrofone) erzeugt wird, kann für den Fall, dass die Hilfsvorrichtung 4 hierzu entsprechend eingerichtet ist, die erste Audiosequenz 14 auch von einem Hilfs-Audiosignal der Hilfsvorrichtung 4 (welches zum Beispiel durch ein Eingangs- bzw. Mikrofonsignal des Mobiltelefons 6 erzeugt wird) generiert werden.

Die konkrete technische Umsetzung für den Auslösemechanismus der Analyse der ersten Audiosequenz 14 durch das Erkennen des bevorzugten Gesprächspartners 10 in der ersten Bildaufnahme 8 kann hierbei folgendermaßen stattfinden: Einerseits kann eine Standard-Applikation zur Erzeugung von Bildaufnahmen in der Hilfsvorrichtung 4 dazu konfiguriert sein, die Analyse hinsichtlich der Anwesenheit des bevorzugten Gesprächspartners 10 unmittelbar bei jedem erzeugen einer neuen Bildaufnahme, also insbesondere beim Erzeugen der ersten Bildaufnahme 8, automatisch durchzuführen, wobei für die Gesichtserkennung ein Datenabgleich mit den in der Standard-Applikation selbst hinterlegten bevorzugten Personen erfolgen kann. Andererseits kann eine für die Durchführung der Erkennungsphase dediziert eingerichtete Applikation 15 auf der Hilfsvorrichtung 4 durch einen sofortigen, unmittelbaren Zugriff auf die in der Hilfsvorrichtung 4 erzeugten Bildaufnahmen die Gesichtserkennung und somit die Analyse hinsichtlich der Anwesenheit des bevorzugten Gesprächspartners 10 durchführen.

Hierbei kann zusätzlich einer Erkennung erfolgen, ob der bevorzugte Gesprächspartner 10 allein anwesend ist, um hierdurch eine für die Erkennungsphase 1 potentiell störende Anwesenheit weiterer Sprecher im Wesentlichen ausschließen zu können. Überdies kann die erste Bildaufnahme 8 als Teil einer nicht näher dargestellten ersten Bildsequenz aufgenommen werden, wobei in der ersten Bildsequenz, bevorzugt über eine Gesten- und Mimik-Erkennung der dedizierten Applikation 15, zudem erkannt wird, ob beim bevorzugten Gesprächspartner 10 gerade eine Mundbewegung vorliegt, welche einer Sprachaktivität entspricht, um den potentiellen Einfluss von Störgeräuschen weiter einzudämmen.

Wird nun die Anwesenheit des bevorzugten Gesprächspartners 10 in der ersten Bildaufnahme 8 erkannt, so sendet die dedizierte, für das Verfahren vorgesehen Applikation 15 auf der Hilfsvorrichtung 4 nach einer erfolgreichen Erkennung des bevorzugten Gesprächspartners 10 in der ersten Bildaufnahme 8 ein Trigger-Signal 16 an das Hörgerät 2. Daraufhin wird im Hörgerät 2 aus dem Audiosignal 12 (welches durch einen Eingangswandler des Hörgerätes 2 gewonnen wurde) die erste Audiosequenz 14 zu einer weiteren Analyse generiert. Hierbei kann die Erkennung des bevorzugten Gesprächspartners 10 in der ersten Bildaufnahme 8 durch die Standard-Applikation in der Hilfsvorrichtung 4 erfolgen, sodass die für das Verfahren dedizierte Applikation 15 lediglich das Trigger-Signal 16 erzeugt, oder aber die für das Verfahren dedizierte Applikation 15 kann die Erkennung in der ersten Bildaufnahme 8 selbst durchführen und daraufhin auch das Trigger-Signal erzeugen.

Ebenso ist denkbar (nicht dargestellt), dass die erste Audiosequenz 14 aus dem Hilfs-Audiosignal der Hilfsvorrichtung 4 für eine weitere Analyse erzeugt wird. Dabei kann entweder die Standard-Applikation zur Erzeugung von Bildaufnahmen in Hilfsvorrichtung 4 über eine entsprechende Programm-Schnittstelle das Trigger-Signal 15 an die für die Durchführung des Verfahrens dedizierte Applikation 15 ausgeben - wenn die Erkennung durch die Standard-Applikation erfolgte - und die dedizierte Applikation 15 anschließend aus dem Hilfs-Audiosignal der Hilfsvorrichtung 4 (zum Beispiel durch ein Eingangs- bzw. Mikrofonsignal) die erste Audiosequenz 14 erzeugen und anschließend auch in noch zu beschreibender Weise weiter analysieren. Alternativ dazu kann die dedizierte Applikation 15 durch einen Zugriff auf die in der Hilfsvorrichtung 4 erzeugten Bildaufnahmen die Erkennung des bevorzugten Gesprächspartners 10 in der ersten Bildaufnahme 8, wie beschrieben, selbst durchführen, und daraufhin die die erste Audiosequenz 14 aus dem Hilfs-Audiosignal der Hilfsvorrichtung 4 für die weitere Analyse generieren.

Die erste Audiosequenz 14 wird nun in eine Mehrzahl an Teilsequenzen 18 zerlegt. Insbesondere können dabei die einzelnen Teilsequenzen 18 verschiedene Gruppen von Teilsequenzen 18a, b bilden, wobei Teilsequenzen derselben Gruppe jeweils die gleiche Länge aufweisen, sodass durch die Gruppen von Teilsequenzen 18a, b eine Aufteilung der ersten Audiosequenz 14 in einzelne Blöcke von jeweils 100 ms Länge (18a) bzw. Blöcke von 2,5 Sekunden Länge (18b) erfolgt, welche die erste Audiosequenz 14 jeweils vollständig wiedergeben. Die einzelnen Teilsequenzen 18a, b werden nun einerseits einer Spracherkennung der eigenen Sprache 20 ("own voice detection", OVD) des Benutzers des Hörgerätes 2 unterzogen, um diejenigen der Teilsequenzen 18a, b herauszufiltern, in denen eine Sprachaktivität lediglich oder überwiegend vom Benutzer des Hörgerätes 2 selbst stammt, da in diesen Teilsequenzen 18a, b vernünftigerweise keine spektrale Information über den bevorzugten Gesprächspartner 10 extrahiert werden kann. Andererseits werden die Teilsequenzen 18a, b hinsichtlich ihrer Signalqualität bewertet. Dies kann beispielsweise über das SNR 22 sowie über einen Sprachverständlichkeitsparameter 24 (wie er beispielsweise durch den speech intelligibility index, SII, gegeben sein kann) erfolgen. Für eine weitere Analyse werden lediglich diejenigen der Teilsequenzen 18a, b verwendet, in welchen eine hinreichend geringe oder gar keine eigene Sprachaktivität des Benutzers des Hörgerätes 2 vorliegt, und welche ein hinreichend hohes SNR 22 sowie einen hinreichend hohen SII 24 aufweisen.

Diejenigen der kürzeren Teilsequenzen 18a, welche also keine eigene Sprachaktivität des Benutzers des Hörgerätes 2 und zudem eine hinreichend hohe Signalqualität im Sinne des SNR 22 und des SII 24 aufweisen, werden nun bezüglich der Tonhöhe, der Frequenzen von Formanten und der Spektren von Einzellauten ("Phonen") analysiert, um daraus Sprecher-Identifikationsparameter 30 zu ermitteln, welche für den bevorzugten Gesprächspartner 10 charakteristisch sind. Hierbei werden die Teilsequenzen 18a insbesondere auf wiederkehrende Muster, also z.B. konkret bei einer Frequenz erkennbare Formanten oder wiederholte, charakteristische Frequenz-Verläufe der Phone hin untersucht. Generell - also insbesondere auch in anderen möglichen Ausführungsformen - kann dabei eine Untersuchung, ob die zu einem bestimmten bevorzugten Gesprächspartner 10 vorliegenden Daten aus der ersten Audiosequenz 14 als "charakteristisch" einzustufen sind, auch anhand eines Vergleiches mit den hinterlegten charakteristischen Sprecher-Identifikationsparametern von anderen Sprechern ermittelt werden, z.B. über eine Abweichung eines vorliegenden Frequenz-Wertes oder einer vorliegenden Phon-Dauer von einem Mittelwert der entsprechenden hinterlegten Werte.

Die längeren Teilsequenzen 18b ohne nennenswerte Sprachaktivität des Benutzers des Hörgerätes 2 und mit hinreichend hoher Signalqualität (s.o.) werden bezüglich der zeitlichen Verteilung von Betonungen und von Sprachpausen analysiert, um daraus weitere, für den bevorzugten Gesprächspartner 10 charakteristische Sprecher-Identifikationsparameter 30 zu ermitteln. Auch hier kann die Analyse über wiederkehrende Muster und insbesondere über einen Vergleich mit zu anderen Sprechern hinterlegten charakteristischen Sprecher-Identifikationsparametern und den entsprechenden Abweichungen von diesen erfolgen. Die anhand der Teilsequenzen 18a, b der ersten Audiosequenz 14 ermittelten Sprecher-Identifikationsparameter 30 werden nun in einer Datenbank 31 des Hörgerätes 2 hinterlegt.

Wird nun in der Hilfsvorrichtung 4 eine zweite Bildaufnahme 32 erzeugt, kann dieses in der vorbeschriebenen Weise, analog zur ersten Bildaufnahme 8, ebenfalls auf eine Anwesenheit eines bevorzugten Gesprächspartners hin, und somit insbesondere auf eine Anwesenheit des bevorzugten Gesprächspartners 10 hin untersucht werden, und, falls letztere festgestellt wird, aus dem Audiosignal 12 analog zum vorbeschriebenen Fall eine zweite Audiosequenz 34 erstellt werden. Auch anhand der zweiten Audiosequenz 34 werden charakteristische Sprecher-Identifikationsparameter 36 ermittelt, wofür die zweite Audiosequenz 34 in nicht näher dargestellter Weise, jedoch analog zur ersten Audiosequenz 14, in einzelne Teilsequenzen von zweierlei Längen zerlegt wird, von denen wiederum nur diejenigen mit hinreichend hoher Signalqualität und ohne eigene Sprachbeiträge des Benutzers des Hörgerätes zur Signalanalyse hinsichtlich der Sprecher-Identifikationsparameter 36 verwendet werden.

Die anhand der zweiten Audiosequenz 34 ermittelten Sprecher-Identifikationsparameter 36 können nun dazu verwendet werden, die anhand der ersten Audiosequenz 14 ermittelten und bereits in der Datenbank 31 des Hörgerätes 2 hinterlegten Sprecher-Identifikationsparameter 30 anzupassen, sodass diese ggf. mit veränderten Werten abgespeichert werden. Dies kann über eine insbesondere gewichtete oder rekursive Mittelwertbildung oder über ein künstliches neuronales Netz erfolgen. Liegen dabei jedoch die Abweichungen der anhand der zweiten Audiosequenz 34 ermittelten Sprecher-Identifikationsparameter 36 von den bereits hinterlegten, anhand der ersten Audiosequenz 14 ermittelten Sprecher-Identifikationsparameter 30 unterhalb eines vorgegebenen Grenzwertes, so wird angenommen, dass die hinterlegten Sprecher-Identifikationsparameter 30 den bevorzugten Gesprächspartner hinreichend sicher charakterisieren, und die Erkennungsphase 1 kann beendet werden.

Alternativ zum dargestellten Vorgehen können, wie bereits angedeutet, Teile der Erkennungsphase 1 auch in der Hilfsvorrichtung 4, insbesondere mittels der dedizierten Applikation 15 durchgeführt werden. Insbesondere kann die Ermittlung der charakteristischen Sprecher-Identifikationsparameter 30 vollständig auf einer als Mobiltelefon 6 ausgebildeten Hilfsvorrichtung 4 durchgeführt werden, wobei lediglich die Sprecher-Identifikationsparameter 30 zur Hinterlegung auf einer in einem Speicher des Hörgerätes 2 implementierten Datenbank 31 vom Mobiltelefon 6 an das Hörgerät 2 übertragen werden.

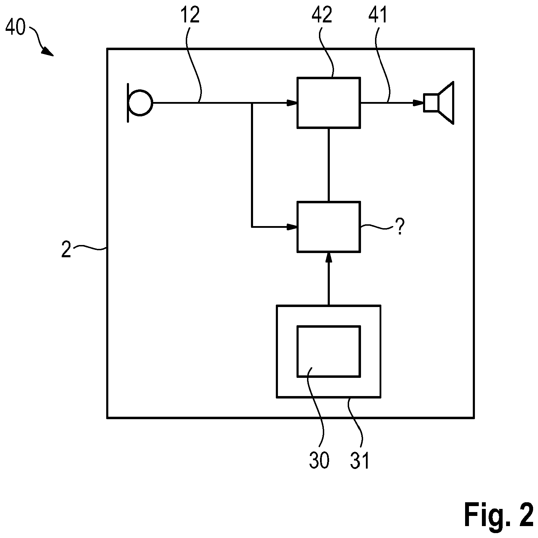

In Figur 2 ist schematisch in einem Blockdiagramm eine Anwendungsphase 40 des Verfahrens für individualisierte Signalverarbeitung im Hörgerät 2 dargestellt. Ziel der Anwendungsphase 40 ist es, anhand der in der Erkennungsphase 1 ermittelten und hinterlegten charakteristischen Sprecher-Identifikationsparameter 30 die Sprachbeiträge des bevorzugten Gesprächspartners 10 in einem Eingangssignal des Hörgerätes 2 erkennen zu können, um dieses in einem Ausgangssignal 41 für den Benutzer des Hörgerätes 2 gezielt gegenüber einem Rauschhintergrund, aber auch gegenüber anderen Sprachbeiträgen von anderen Sprechern hervorheben zu können.

Ist die Erkennungsphase 1 beendet, so wird das Audiosignal 12 des Hörgerätes 2 in dessen Betrieb hinsichtlich der hinterlegten Sprecher-Identifikationsparameter 30 analysiert. Wird dabei anhand einer hinreichend hohen Übereinstimmung von Signalkomponenten des Audiosignals 12 mit den zum bevorzugten Gesprächspartner 10 hinterlegten Sprecher-Identifikationsparameter 30 erkannt, dass es sich bei bestimmten Signalkomponenten im Audiosignal 12 um Sprachbeiträge des bevorzugten Gesprächspartner 10 handelt, so können diese Sprachbeiträge gegenüber einem Rauschhintergrund und gegenüber den Sprachbeiträgen anderer Sprecher hervorgehoben werden. Dies kann z.B. über eine BSS 42 erfolgen, oder auch über eine direktionale Signalverarbeitung mittels Richtmikrofone im Hörgerät 2. Die BSS42 ist vorliegend besonders im Falle mehrerer Sprecher vorteilhaft, von welchen der bevorzugte Gesprächspartner 10 besonders hervorgehoben werden soll, da für ihre Durchführung keine nähere Kenntnis über seine Position erforderlich ist, und die Kenntnis seiner hinterlegten Sprecher-Identifikationsparameter 30 für die BSS herangezogen werden kann. Die Analyse des Audiosignals 12 hinsichtlich der Anwesenheit des bevorzugten Gesprächspartners 10 mittels der hinterlegten Sprecher-Identifikationsparameter 30 kann hierbei einerseits automatisch in einem Hintergrundprozess nebenher laufen, andererseits kann diese in Abhängigkeit eines bestimmten Hörprogrammes - z.B. dem für eine "Cocktail-Party"-Hörsituation vorgesehenen - entweder automatisch durch eine Erkennung der Hörsituation im Hörgerät 2 oder durch Anwahl des betreffenden Hörprogramms durch den Benutzer des Hörgerätes 2 gestartet werden.

Zudem kann der Benutzer des Hörgerätes 2 durch eine Benutzereingabe, ggf. über die Hilfsvorrichtung 4, insbesondere mittels der für das Verfahren dedizierten Applikation 15, ad hoc die Analyse selbst in Gang setzen. Weiter kann die Analyse des Audiosignals 12 auch durch eine erneute Bildaufnahme ausgelöst werden, insbesondere in einer zum Triggern der Analyse in der Erkennungsphase 1 analogen Weise, also durch eine beim Erzeugen der Bildaufnahme unmittelbar erfolgenden Gesichtserkennung und einem Auslösen der Analyse im Fall, dass auf einer erzeugten Bildaufnahme der bevorzugte Gesprächspartner erkannt wird. Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung, die durch die Ansprüche definiert ist, zu verlassen.

### Bezugszeichenliste

- 1: Erkennungsphase
- 2: Hörgerät
- 4: Hilfsvorrichtung
- 6: Mobiltelefon
- 8: erste Bildaufnahme
- 10: bevorzugter Gesprächspartner
- 12: Audiosignal
- 14: erste Audiosequenz
- 15: dedizierte (mobile) Applikation
- 16: Triggersignal
- 18: Teilsequenz
- 18a, 18b: Teilsequenz
- 20: OVD/ (Spracherkennung der eigenen Sprache)
- 22: SNR (Signal-zu-Rausch-Verhältnis)
- 24: SII/Sprachverständlichkeitsparameter
- 30: Sprecher-Identifikationsparameter
- 31: Datenbank
- 32: zweite Bildaufnahme
- 34: zweite Audiosequenz
- 36: Sprecher-Identifikationsparameter
- 40: Anwendungsphase
- 41: Ausgangssignal
- 42: BSS (blinde Quelltrennung)

## Patentansprüche

1. Verfahren für eine individualisierte Signalverarbeitung eines Audiosignals (12) eines Hörgerätes,
wobei in einer Erkennungsphase (1):
- durch eine Hilfsvorrichtung (4) eine erste Bildaufnahme (8) erzeugt wird,
- anhand der ersten Bildaufnahme (8) automatisch auf eine Anwesenheit eines bevorzugten Gesprächspartners (10) geschlossen wird, und hierauf eine erste Audiosequenz (14) des Audiosignals (12) und/oder eines Hilfs-Audiosignals der Hilfsvorrichtung (4) auf charakteristische Sprecher-Identifikationsparameter (30) hin analysiert wird, und
- die in der ersten Audiosequenz (14) ermittelten Sprecher-Identifikationsparameter (30) in einer Datenbank (31) hinterlegt werden, und wobei in einer Anwendungsphase (40)
- das Audiosignal (12) bezüglich der hinterlegten Sprecher-Identifikationsparameter (30) analysiert wird, und hierdurch hinsichtlich einer Anwesenheit des bevorzugten Gesprächspartners (10) bewertet wird, und
- bei einer erkannten Anwesenheit des bevorzugten Gesprächspartners (10) dessen Signalbeiträge im Audiosignal (12) hervorgehoben werden.

2. Verfahren nach Anspruch 1,
wobei der bevorzugte Gesprächspartner (10) in der ersten Bildaufnahme (8) anhand einer Gesichtserkennung erkannt wird.

3. Verfahren nach Anspruch 1 oder Anspruch 2,
wobei als Hilfsvorrichtung (4) ein Mobiltelefon (6) und/oder eine Datenbrille verwendet wird.

4. Verfahren nach einem der vorhergehenden Ansprüche,
wobei wenigstens ein Teil der Analyse der Erkennungsphase (1) und/oder die Erzeugung des Audiosignals für die Erkennungsphase (1) in der Hilfsvorrichtung (4) erfolgt.

5. Verfahren nach einem der vorhergehenden Ansprüche,
wobei als Sprecher-Identifikationsparameter (30)
- eine Anzahl an Tonhöhen und/oder
- eine Anzahl an Formantenfrequenzen und/oder
- eine Anzahl an Phonspektren und/oder
- eine Verteilung von Betonungen und/oder
- eine zeitlicher Verlauf von Phonen und/oder Sprachpausen analysiert werden.

6. Verfahren nach einem der vorhergehenden Ansprüche,
wobei die erste Audiosequenz (14) in eine Mehrzahl an Teilsequenzen (18, 18a, 18b) zerlegt wird,
wobei für jede der Teilsequenzen (18, 18a, 18b) jeweils ein Sprachverständlichkeitsparameter (24) und/oder ein Signal-zu-Rausch-Verhältnis (22) ermittelt und mit einem zugehörigen Kriterium verglichen wird, und
wobei für die Analyse hinsichtlich der charakteristischen Sprecher-Identifikationsparameter (30) nur diejenigen Teilsequenzen (18, 18a, 18b) herangezogen werden, welche jeweils das Kriterium erfüllen.

7. Verfahren nach einem der vorhergehenden Ansprüche,
wobei die erste Audiosequenz (14) in eine Mehrzahl an Teilsequenzen zerlegt wird (18, 18a, 18b),
wobei eine Überwachung (20) der eigenen Sprachaktivität des Benutzers des Hörgerätes (2) durchgeführt wird, und
wobei für die Analyse hinsichtlich der charakteristischen Sprecher-Identifikationsparameter (30) nur diejenigen Teilsequenzen (18, 18a, 18b) herangezogen werden, deren Anteil an eigener Sprachaktivität des Benutzers eine vorgegebene Obergrenze nicht überschreitet.

8. Verfahren nach einem der vorhergehenden Ansprüche,
wobei durch die Hilfsvorrichtung (4) eine zweite Bildaufnahme (32) erzeugt wird, wobei auf die zweite Bildaufnahme (32) hin eine zweite Audiosequenz (34) des Audiosignals (12) und/oder eines Hilfs-Audiosignals der Hilfsvorrichtung (4) hinsichtlich charakteristischer Sprecher-Identifikationsparameter (36) analysiert wird, und
wobei mittels der anhand der zweiten Audiosequenz (34) ermittelten Sprecher-Identifikationsparameter (36) die in der Datenbank (31) hinterlegten Sprecher-Identifikationsparameter (30) angepasst werden.

9. Verfahren nach Anspruch 8,
wobei die Anpassung der in der Datenbank (31) hinterlegten Sprecher-Identifikationsparameter (30) mittels der anhand der zweiten Audiosequenz (34) ermittelten Sprecher-Identifikationsparameter (36) durch eine Mittelung und/oder durch ein künstliches neuronales Netz erfolgt.

10. Verfahren nach Anspruch 8 oder Anspruch 9,
wobei die Erkennungsphase (1) beendet wird, wenn eine Abweichung der anhand der zweiten Audiosequenz (34) ermittelten Sprecher-Identifikationsparameter (36) von den in der Datenbank hinterlegten Sprecher-Identifikationsparametern (30) einen Grenzwert unterschreitet.

11. Verfahren nach einem der vorhergehenden Ansprüche,
wobei in der Anwendungsphase (40) die Analyse des Audiosignals (12) anhand einer weiteren Bildaufnahme der Hilfsvorrichtung (4) initiiert wird.

12. Verfahren nach einem der vorhergehenden Ansprüche,
wobei in der ersten Bildaufnahme (8) eine Anzahl an anwesenden Personen bestimmt wird, und
wobei die erste Audiosequenz (12) des Audiosignals bzw. des Hilfs-Audiosignals der Hilfsvorrichtung (4) in Abhängigkeit der Anzahl der anwesenden Personen analysiert wird.

13. Verfahren nach einem der vorhergehenden Ansprüche,
wobei die erste Bildaufnahme (8) als Teil einer ersten Bildsequenz erzeugt wird, wobei in der ersten Bildsequenz eine Sprachaktivität des bevorzugten Gesprächspartners (10) erkannt wird, und
wobei die erste Audiosequenz (14) des Audiosignals bzw. des Hilfs-Audiosignals der Hilfsvorrichtung (4) in Abhängigkeit der erkannten Sprachaktivität des bevorzugten Gesprächspartners (10) analysiert wird.

14. Verfahren nach einem der vorhergehenden Ansprüche,
wobei eine Anhebung der Signalbeiträge des bevorzugten Gesprächspartners (10) anhand einer direktionalen Signalverarbeitung und/oder anhand einer blinden Quellentrennung (42) erfolgt.

15. System umfassend ein Hörgerät (2) und eine Hilfsvorrichtung (4),
wobei die Hilfsvorrichtung (4) zum Erzeugen einer Bildaufnahme (8, 32) eingerichtet ist, und
wobei das System zur Durchführung des Verfahrens nach einem der vorhergehenden Ansprüche eingerichtet ist.

16. System nach Anspruch 15, wobei die Hilfsvorrichtung (4) als ein Mobiltelefon (6) ausgestaltet ist.

## Claims

1. Method for individualized signal processing of an audio signal (12) of a hearing device,
wherein in a recognition phase (1):
- an auxiliary apparatus (4) produces a first image capture (8),
- the first image capture (8) is used to automatically infer that a preferred interlocutor (10) is present, and this is followed by a first audio sequence (14) of the audio signal (12) and/or of an auxiliary audio signal of the auxiliary apparatus (4) being analysed with regard to characteristic speaker identification parameters (30), and
- the speaker identification parameters (30) determined in the first audio sequence (14) are stored in a database (31), and
wherein in an application phase (40)
- the audio signal (12) is analysed with respect to the stored speaker identification parameters (30) and, as a result, is rated in respect of the preferred interlocutor (10) being present, and
- if the preferred interlocutor (10) is detected as being present then the signal contributions of said interlocutor are emphasized in the audio signal (12).

2. Method according to Claim 1,
wherein the preferred interlocutor (10) is recognized in the first image capture (8) on the basis of a facial recognition.

3. Method according to Claim 1 or Claim 2,
wherein the auxiliary apparatus (4) used is a mobile phone (6) and/or smartglasses.

4. Method according to one of the preceding claims, wherein at least part of the analysis of the recognition phase (1) and/or the generation of the audio signal for the recognition phase (1) takes place in the auxiliary apparatus (4).

5. Method according to one of the preceding claims, wherein the speaker identification parameters (30) analysed are
- a number of pitches and/or
- a number of formant frequencies and/or
- a number of phone spectra and/or
- a distribution of stresses and/or
- a time characteristic of phones and/or pauses in speech.

6. Method according to one of the preceding claims,
wherein the first audio sequence (14) is broken down into a plurality of sub-sequences (18, 18a, 18b),
wherein a respective speech intelligibility parameter (24) and/or signal-to-noise ratio (22) is determined for each of the sub-sequences (18, 18a, 18b) and compared with a related criterion, and
wherein only those sub-sequences (18, 18a, 18b) that meet the respective criterion are used for the analysis in respect of the characteristic speaker identification parameters (30).

7. Method according to one of the preceding claims,
wherein the first audio sequence (14) is broken down into a plurality of sub-sequences (18, 18a, 18b),
wherein the own voice activity of the user of the hearing device (2) is monitored (20), and
wherein only those sub-sequences (18, 18a, 18b) whose proportion of own voice activity from the user is not above a predefined upper limit are used for the analysis in respect of the characteristic speaker identification parameters (30).

8. Method according to one of the preceding claims,
wherein the auxiliary apparatus (4) produces a second image capture (32),
wherein the second image capture (32) is followed by a second audio sequence (34) of the audio signal (12) and/or of an auxiliary audio signal of the auxiliary apparatus (4) being analysed in respect of characteristic speaker identification parameters (36), and
wherein the speaker identification parameters (36) determined on the basis of the second audio sequence (34) are used to adapt the speaker identification parameters (30) stored in the database (31).

9. Method according to Claim 8,
wherein the speaker identification parameters (30) stored in the database (31) are adapted by means of the speaker identification parameters (36) determined on the basis of the second audio sequence (34) by way of an averaging and/or by way of an artificial neural network.

10. Method according to Claim 8 or Claim 9,
wherein the recognition phase (1) is terminated if a variance in the speaker identification parameters (36) determined on the basis of the second audio sequence (34) from the speaker identification parameters (30) stored in the database is below a limit value.

11. Method according to one of the preceding claims,
wherein the analysis of the audio signal (12) in the application phase (40) is initiated on the basis of another image capture from the auxiliary apparatus (4).

12. Method according to one of the preceding claims,
wherein a number of individuals present in the first image capture (8) is determined, and
wherein the first audio sequence (12) of the audio signal or of the auxiliary audio signal of the auxiliary apparatus (4) is analysed according to the number of individuals present.

13. Method according to one of the preceding claims,
wherein the first image capture (8) is produced as part of a first image sequence,
wherein a voice activity of the preferred interlocutor (10) is identified in the first image sequence, and
wherein the first audio sequence (14) of the audio signal or of the auxiliary audio signal of the auxiliary apparatus (4) is analysed according to the identified voice activity of the preferred interlocutor (10) .

14. Method according to one of the preceding claims,
wherein the signal contributions of the preferred interlocutor (10) are raised on the basis of a directional signal processing and/or on the basis of a blind source separation (42).

15. System comprising a hearing device (2) and an auxiliary apparatus (4),
wherein the auxiliary apparatus (4) is configured to produce an image capture (8, 32), and
wherein the system is configured to perform the method according to one of the preceding claims.

16. System according to Claim 15, wherein the auxiliary apparatus (4) is embodied as a mobile phone (6) .

## Revendications

1. Procédé destiné à un traitement de signal individualisé d'un signal audio (12) d'un appareil auditif,
dans lequel dans une phase de reconnaissance (1) :
- une première prise de vue (8) est générée par un dispositif auxiliaire (4),
- à l'aide de la première prise de vue (8), il est conclu automatiquement à la présence d'un interlocuteur préféré (10), et sur ce, une première séquence audio (14) du signal audio (12) et/ou d'un signal audio auxiliaire du dispositif auxiliaire (4) est analysée quant à des paramètres d'identification de locuteur (30) caractéristiques, et
- les paramètres d'identification de locuteur (30) établis dans la première séquence audio (14) sont sauvegardés dans une base de données (31), et
dans lequel, dans une phase d'application (40)
- le signal audio (12) est analysé quant aux paramètres d'identification de locuteur (30) sauvegardés et est de ce fait évalué quant à la présence de l'interlocuteur préféré (10), et
- en cas de présence reconnue de l'interlocuteur préféré (10), les contributions au signal de celui-ci dans le signal audio (12) sont accentuées.

2. Procédé selon la revendication 1, dans lequel l'interlocuteur préféré (10) est reconnu sur la première prise de vue (8) à l'aide d'une reconnaissance faciale.

3. Procédé selon la revendication 1 ou la revendication 2, dans lequel un téléphone mobile (6) et/ou des lunettes connectées sont utilisés en tant que dispositif auxiliaire (4).

4. Procédé selon l'une quelconque des revendications précédentes, dans lequel au moins une partie de l'analyse de la phase de reconnaissance (1) et/ou de la génération du signal audio pour la phase de reconnaissance (1) est effectuée dans le dispositif auxiliaire (4).

5. Procédé selon l'une quelconque des revendications précédentes, dans lequel
- un nombre donné de tonalités, et/ou
- un nombre donné de fréquences de formant, et/ou
- un nombre donné de spectres de phones, et/ou
- une distribution d'intonations, et/ou
- une évolution dans le temps de phones et/ou de silences
sont analysés en tant que paramètres d'identification de locuteur (30).

6. Procédé selon l'une quelconque des revendications précédentes,
dans lequel la première séquence audio (14) est décomposée en une pluralité de séquences partielles (18, 18a, 18b),
dans lequel, pour chacune des séquences partielles (18, 18a, 18b), respectivement un paramètre d'intelligibilité (24) et/ou un rapport signal/bruit (22) sont établis et comparés avec un critère associé, et
dans lequel seules les séquences partielles (18, 18a, 18b) satisfaisant respectivement le critère sont exploitées pour l'analyse concernant les paramètres d'identification de locuteur (30) caractéristiques.

7. Procédé selon l'une quelconque des revendications précédentes,
dans lequel la première séquence audio (14) est décomposée en une pluralité de séquences partielles (18, 18a, 18b),
dans lequel une surveillance (20) de l'activité vocale propre de l'utilisateur de l'appareil auditif (2) est effectuée, et
dans lequel seules les séquences partielles (18, 18a, 18b) dont la part d'activité vocale propre de l'utilisateur ne dépasse pas une limite supérieure prédéfinie sont exploitées pour l'analyse concernant les paramètres d'identification de locuteur (30) caractéristiques.

8. Procédé selon l'une quelconque des revendications précédentes,
dans lequel le dispositif auxiliaire (4) génère une deuxième prise de vue (32),
dans lequel suite à la deuxième prise de vue (32), une deuxième séquence audio (34) du signal audio (12) et/ou d'un signal audio auxiliaire du dispositif auxiliaire (4) est analysée concernant des paramètres d'identification de locuteur (36) caractéristiques, et
dans lequel les paramètres d'identification de locuteur (30) sauvegardés dans la base de données (31) sont adaptés au moyen des paramètres d'identification de locuteur (36) établis à l'aide de la deuxième séquence audio (34).

9. Procédé selon la revendication 8,
dans lequel l'adaptation des paramètres d'identification de locuteur (30) sauvegardés dans la base de données (31) est effectuée au moyen des paramètres d'identification de locuteur (36) établis à l'aide de la deuxième séquence audio (34) par un calcul de moyenne et/ou par un réseau neuronal artificiel.

10. Procédé selon la revendication 8 ou la revendication 9, dans lequel la phase de reconnaissance (1) est terminée lorsqu'un écart des paramètres d'identification de locuteur (36) établis à l'aide de la deuxième séquence audio (34) par rapport aux paramètres d'identification de locuteur (30) sauvegardés dans la base de données est inférieur à une valeur limite.

11. Procédé selon l'une quelconque des revendications précédentes, dans lequel dans la phase d'application (40), l'analyse du signal audio (12) est initiée à l'aide d'une prise de vue supplémentaire du dispositif auxiliaire (4).

12. Procédé selon l'une quelconque des revendications précédentes,
dans lequel un nombre donné de personnes présentes est déterminé sur la première prise de vue (8), et
dans lequel la première séquence audio (12) du signal audio ou du signal audio auxiliaire du dispositif auxiliaire (4) est analysée en fonction du nombre des personnes présentes.

13. Procédé selon l'une quelconque des revendications précédentes,
dans lequel la première prise de vue (8) est générée sous la forme d'une partie d'une première séquence d'images,
dans lequel une activité vocale de l'interlocuteur (10) préféré est reconnue dans la première séquences d'images, et
dans lequel la première séquence audio (14) du signal audio ou du signal audio auxiliaire du dispositif auxiliaire (4) est analysée en fonction de l'activité vocale reconnue de l'interlocuteur préféré (10) .

14. Procédé selon l'une quelconque des revendications précédentes, dans lequel une accentuation des contributions au signal de l'interlocuteur préféré (10) est effectuée à l'aide d'un traitement de signal directionnel et/ou à l'aide d'une séparation aveugle de source (42).

15. Système, comprenant un appareil auditif (2) et un dispositif auxiliaire (4),
dans lequel le dispositif auxiliaire (4) est conçu pour générer une prise de vue (8, 32), et
dans lequel le système est conçu pour exécuter le procédé selon l'une quelconque des revendications précédentes.

16. Système selon la revendication 15, dans lequel le dispositif auxiliaire (4) est réalisé sous la forme d'un téléphone mobile (6).
